# DEMANDE DE BREVET EUROPEEN

(11) **EP 1 247 998 A1**
(43) Date de publication de la demande: **09.10.2002**
(21) Numéro de dépôt: 02290858.6
(22) Date de dépôt: 05.04.2002
(51) Int. Cl.: F16B 2/24, B60R 9/10

(54) **Assemblage mécanique réglable, et application**

(30) Priorité: 05.04.2001 FR 0104650
(71) Demandeur: Sinto Auto, 35400 Saint Malo (FR)
(72) Inventeur: Ringeard, Thierry, 35400 Saint-Malo (FR)
(74) Mandataire: Bentz, Jean-Paul

(57) **Abrégé**

L'invention concerne un assemblage mécanique réglable, comprenant un tube (11), une tige (21) montée coulissante dans le tube (11), et un mécanisme d'arrêt (3).

Selon l'invention, le mécanisme d'arrêt (3) comprend notamment une rondelle de blocage (4) basculante, un ressort précontraint (5) sollicitant la rondelle vers une position basculée de blocage de la tige, et un levier (6) susceptible de ramener la rondelle (4) en position transversale pour libérer la tige, la rondelle (4) et le ressort (5) étant de préférence portés par un chariot (8) mobile en translation par rapport au tube (11) sous l'effet d'une rotation du levier (6), conformé en poignée.

## Description

L'invention concerne, de façon générale, un assemblage mécanique susceptible de subir un réglage dimensionnel, par exemple pour pouvoir constituer un support de bicyclette.

Plus précisément, l'invention concerne un assemblage mécanique réglable, comprenant au moins un premier tube, une première tige amovible sélectivement montée coulissante dans le premier tube, et un mécanisme d'arrêt permettant d'immobiliser à volonté la première tige en translation dans le premier tube.

Bien que de tels assemblages soient connus, les performances requises du mécanisme d'arrêt quant à la qualité de l'immobilisation de la tige par rapport au tube peuvent varier, d'une application à l'autre, dans de larges proportions.

L'invention se place précisément dans un contexte dans lequel le mécanisme d'arrêt doit offrir des garanties de sécurité élevées vis-à-vis de tout risque de relâchement de la tige, et a pour but de proposer un assemblage mécanique répondant à ce besoin.

A cette fin, l'assemblage de l'invention, par ailleurs conforme à la définition générique qu'en donne le préambule ci-dessus, est essentiellement caractérisé en ce que le mécanisme d'arrêt comprend une rondelle de blocage, un point de basculement, un ressort précontraint, un levier, et un point d'appui, en ce que la rondelle est montée basculante autour du point de basculement et percée d'un orifice dans lequel la première tige est enfilée et peut ou ne peut pas coulisser, selon que la rondelle adopte respectivement, par rapport à cette première tige, une position transversale ou une position basculée obliquement, en ce que le ressort exerce sur la rondelle une force élastique qui la sollicite vers sa position basculée par rotation autour du point de basculement, et en ce que le levier est sélectivement mobile, autour du point d'appui, entre une position de blocage de la première tige et une position de déblocage de la première tige, le levier exerçant, en position de déblocage, une force de compensation qui s'oppose à la force élastique du ressort et qui place la rondelle en position transversale.

Dans un mode de réalisation préféré de l'invention, la rondelle, le point de basculement et le ressort sont mobiles en translation par rapport au premier tube.

Par exemple, il est possible de prévoir que cet assemblage comprenne une butée fixe par rapport au premier tube, que la rondelle présente un point de butée disposé au-delà de la première tige par rapport au point de basculement, et que la rondelle soit déplacée de sa position basculée vers sa position transversale par translation du point de basculement par rapport au premier tube, et par appui du point de butée contre la butée fixe.

Un tel assemblage peut comprendre un boîtier fixe par rapport au premier tube, la rondelle, le point de basculement et le ressort étant alors portés par un chariot mobile en translation par rapport au boîtier, et ce chariot adoptant, par rapport au boîtier, une position de translation dépendant de la position du levier.

Dans ce cas, le point d'appui du levier est de préférence constitué par un axe de rotation prévu dans le boîtier, le ressort pouvant quant à lui être précontraint en compression entre une cloison du chariot et la rondelle.

Le levier porte avantageusement un ou plusieurs pions d'entraînement distants de l'axe de rotation et engagés dans une lumière du chariot.

Pour améliorer le maintien de la première tige, cette tige peut avoir une section polygonale régulière présentant un nombre pair de côtés.

Il est possible de prévoir qu'un tel assemblage comprenne une fourche creuse et une fourche pleine, que la fourche creuse comprenne le premier tube, un second tube coplanaire avec le premier, et un étrier reliant les premier et second tubes l'un à l'autre, que la fourche pleine comprenne la première tige, une seconde tige, et une base reliant les première et seconde tiges l'une à l'autre, que la seconde tige soit amovible et montée coulissante dans le second tube, et qu'une partie de la fourche pleine, externe à la fourche creuse, et l'étrier forment ensemble un anneau de dimension réglable par déplacement de la première tige dans le premier tube.

L'assemblage de l'invention peut notamment être appliqué à la réalisation d'un support de bicyclette pour véhicule automobile.

D'autres caractéristiques et avantages de l'invention ressortiront clairement de la description qui en est faite ci-après, à tire indicatif et nullement limitatif, en référence aux dessins annexés, dans lesquels :
- la figure 1 est une vue en coupe partielle d'un assemblage conforme à un premier mode de réalisation possible de l'invention;
- la figure 2 est une vue en perspective d'un levier utilisé dans un mode de réalisation préféré de l'invention;
- la figure 3 est une vue de dessus du levier illustré à la figure 2;
- la figure 4 est une vue en perspective d'un chariot utilisé dans le mode de réalisation préféré de l'invention;
- la figure 5 est une vue éclatée en coupe partielle d'un assemblage utilisant un mécanisme d'arrêt conforme au mode de réalisation préféré de l'invention, le levier étant représentant en coupe suivant l'incidence définie par les flèches V-V de la figure 3;
- la figure 6 est une vue en coupe partielle de l'assemblage utilisant un mécanisme d'arrêt conforme au mode de réalisation préféré de l'invention, le levier étant illustré en position de déblocage;
- la figure 7 est une vue en coupe partielle de l'assemblage utilisant un mécanisme d'arrêt conforme au mode de réalisation préféré de l'invention, le levier étant illustré en position intermédiaire;
- la figure 8 est une vue en coupe partielle de l'assemblage utilisant un mécanisme d'arrêt conforme au mode de réalisation préféré de l'invention, le levier étant illustré en position de blocage;
- la figure 9 est une vue en perspective générale d'un assemblage conforme à l'invention, utilisant le mécanisme d'arrêt illustré aux figures 2 à 8, et appliqué au maintien d'une pièce cylindrique; et
- la figure 10 est une vue en perspective générale de l'assemblage illustré à la figure 9 et appliqué au maintien d'une pièce à section rectangulaire.

Comme annoncé précédemment, l'invention concerne un assemblage mécanique réglable, comprenant notamment un tube 11, une tige 21, et un mécanisme d'arrêt 3.

La tige 21 est montée coulissante dans le tube 11 de façon amovible, c'est-à-dire qu'elle peut être intégralement extraite du tube 11.

Selon l'invention, le mécanisme d'arrêt 3, qui permet d'immobiliser à volonté la tige 21 dans une position de translation quelconque à l'intérieur du tube 11, comprend essentiellement une rondelle de blocage 4, un point de basculement 41, un ressort précontraint 5, un levier 6, et un point d'appui 61.

La rondelle 4 est percée d'un orifice 40 dans lequel la tige 21 est enfilée et peut coulisser, dans certaines conditions particulières.

Par ailleurs, la rondelle 4 est montée basculante autour du point de basculement 41 de manière à pouvoir notamment adopter, par rapport à la tige 21, une position transversale pour laquelle la rondelle 4 est perpendiculaire à la tige 21, ou une position basculée dans laquelle la rondelle 4 est disposée obliquement par rapport à la tige 21.

Dans la présente description, l'expression "point de basculement" doit être comprise comme désignant de façon générale toute zone de contact offerte à la rondelle 4 par un appui matériel quelconque et qui permettant le basculement de la rondelle autour de cette zone de contact.

Lorsque la rondelle 4 est dans sa position transversale, la tige 21 coulisse librement dans cette rondelle 4, dont l'orifice 40 a, dans toutes les directions radiales, des dimensions supérieures à celle de la section transversale de la tige 21.

En revanche, lorsque la rondelle 4 est dans sa position basculée, la projection de l'orifice 40 sur la section transversale de la tige 21 présente, suivant au moins un direction radiale, une dimension maximale qui rejoint celle de la section transversale de cette tige, de sorte que la tige 21 est totalement immobilisée dans la rondelle 4.

Le ressort précontraint 5, qui est de préférence précontraint en compression, a pour fonction d'exercer sur la rondelle 4 une force élastique qui sollicite cette rondelle vers sa position basculée par rotation autour du point de basculement 41.

Le levier 6 est monté mobile, autour du point d'appui 61, entre une position de blocage pour laquelle la tige 21 est immobilisée dans la rondelle 4, et une position de déblocage pour laquelle la tige 21 peut coulisser librement dans la rondelle 4.

Pour ce faire, les positions de blocage et de déblocage adoptées par le levier sont choisies de manière que le levier 6 n'exerce aucune force notoire sur le ressort 5 dans sa position de blocage, et qu'il exerce, dans sa position de déblocage, une force de compensation qui s'oppose à la force élastique exercée par le ressort 5 et qui place la rondelle 4 en position transversale.

Dans la présente description, l'expression "point d'appui" doit être comprise comme désignant de façon générale toute zone de contact offerte au levier 6 par un appui matériel quelconque permettant la rotation de ce levier autour de cette zone de contact, le point d'appui pouvant donc notamment être constitué par un axe de rotation du levier dans un support.

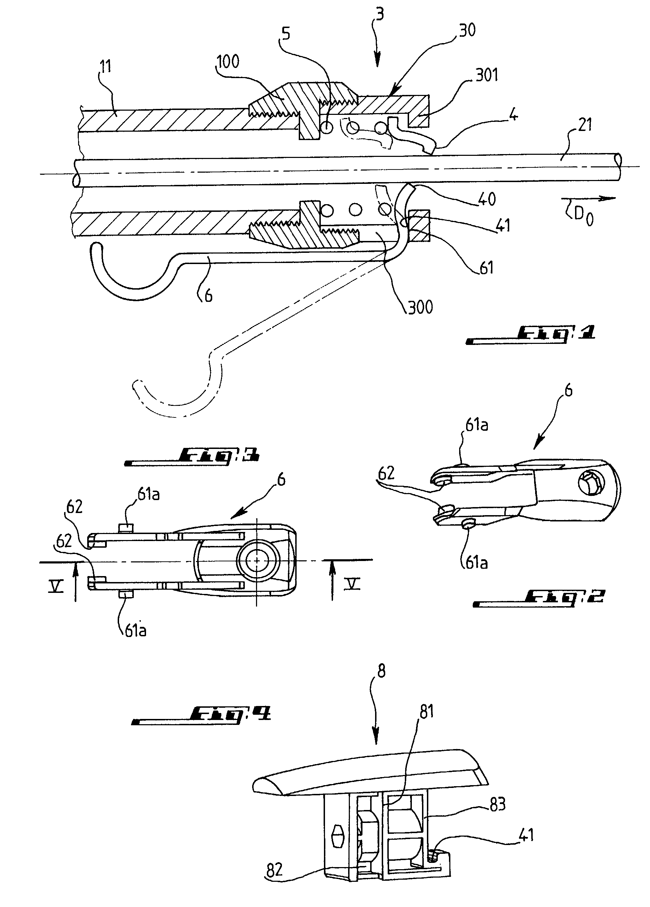

Dans le mode de réalisation illustré à la figure 1, le levier 6 est solidaire de la rondelle 4, le point de basculement 41 de la rondelle 4 étant confondu avec le point d'appui 61 du levier 6.

La rondelle 4 est par exemple disposée dans un manchon 30 raccordé au tube 11 par une bague taraudée 100.

Le manchon 30 présente une fente axiale 300 que traverse le levier 6, et un rebord frontal 301 dont la surface interne offre à la rondelle 4 et au levier 6 les points confondus de basculement 41 et d'appui 61.

La figure 1 illustre en traits pleins la position basculée de la rondelle 4 et la position de blocage du levier 6 qui empêchent le coulissement de la tige 21 par rapport au tube 11, en particulier vis-à-vis d'un effort de traction qui serait exercé sur la tige 21 suivant la direction indiquée par la flèche D.

Dans cette configuration, le ressort 5, précontraint en compression, présente la longueur maximale qu'il peut présenter lorsque la tige 21 est engagée dans la rondelle 4.

La figure 1 illustre en pointillés la position transversale de la rondelle 4 et la position de déblocage du levier 6 qui permettent le coulissement de la tige 21 par rapport au tube 11, suivant la direction indiquée par la flèche D0 ou suivant la direction inverse D1.

Dans cette configuration, le ressort 5, déjà précontraint en compression initialement, subit temporairement une contrainte de compression supplémentaire.

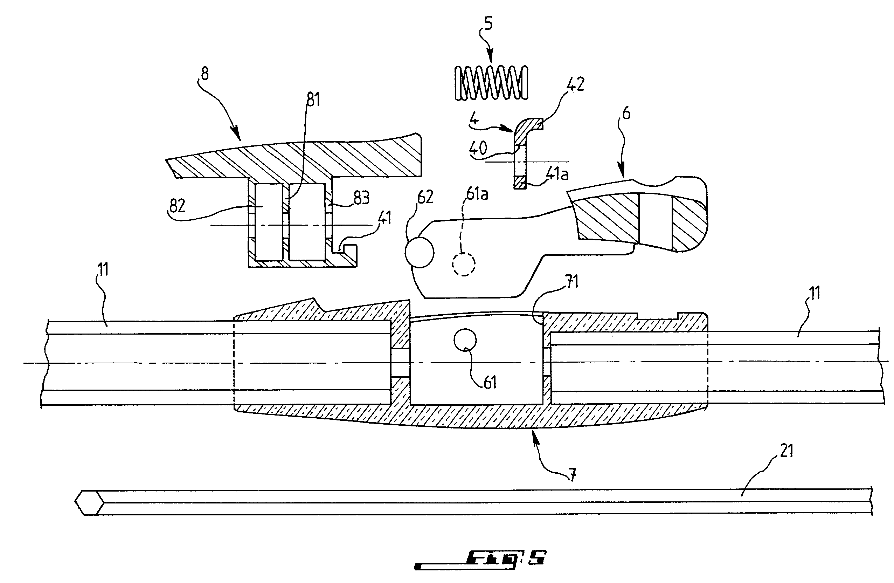

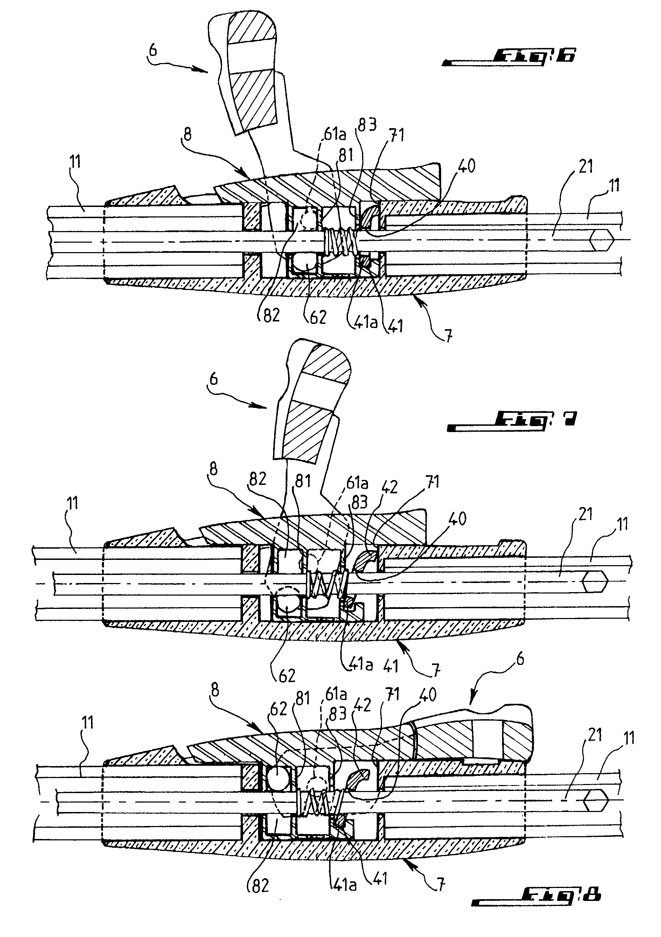

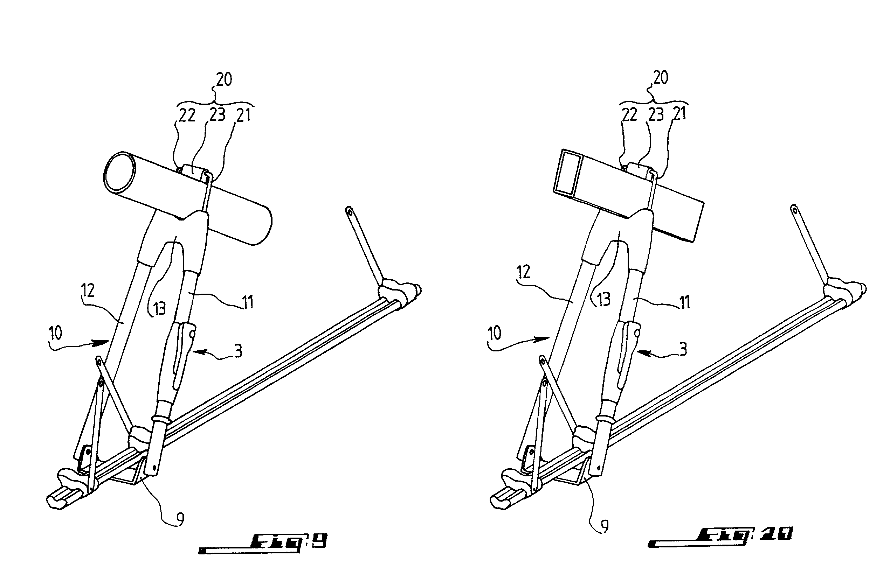

Les figures 2 et 3 représentent un levier 6 formant poignée et utilisé dans le mode de réalisation préféré de l'invention, plus complètement illustré à la figure 5.

La figure 4 illustre elle-même un chariot 8 utilisé en liaison avec ce levier 6.

La figure 5 est une vue éclatée illustrant l'assemblage conforme au mode de réalisation préféré de l'invention, et en particulier son mécanisme d'arrêt 3.

Dans ce mode de réalisation, l'assemblage de l'invention comprend un boîtier 7 solidaire du tube 11 et le chariot 8 monté mobile en translation dans le boîtier 7.

Le levier 6 prend la forme d'une poignée évidée présentant deux joues latérales en vis-à-vis, de manière à pouvoir être mis en place dans le boîtier 7 par pincement élastique de ces joues.

Le point d'appui 61 de ce levier 6 prend la forme d'un axe de rotation constitué par deux perçages 61 prévus dans le boîtier 7 et dans lesquels viennent s'insérer des tourillons 61a faisant saillie des deux joues latérales de ce levier (figures 2 et 3).

La rondelle 4, le point de basculement 41 et le ressort 5 sont portés par le chariot 8, de sorte qu'ils sont mobiles en translation par rapport au premier tube 11.

Le levier 6 formant poignée porte deux pions d'entraînement 62 en vis-à-vis (figures 2 et 3), faisant saillie intérieurement des joues latérales de ce levier, distants de l'axe de rotation 61, et engagés dans une lumière 82 du chariot 8 par écartement élastique des joues.

Par la liaison ainsi constituée entre le boîtier 7, le levier 6 et le chariot 8, le chariot 8 adopte, par rapport au boîtier 7, une position de translation dépendant de la position de rotation du levier 6 autour de l'axe 61.

Par ailleurs, le ressort 5 est précontraint en compression entre une cloison 81 du chariot 8 et la rondelle 4.

Le boîtier 7 présente par exemple une paroi formant, pour la rondelle 4, une butée 71 fixe par rapport au tube 11.

Le point de basculement 41 de la rondelle 4 prend par exemple la forme d'une rainure ménagée à la base d'un paroi 83 du chariot mobile 8 et dans laquelle la rondelle 4 est engagée par son bord de basculement 41a.

La rondelle 4 présente en outre un point de butée 42 qui, en service, est disposé au-delà de la tige par rapport au point de basculement 41, et qui est avancé en direction de la butée fixe 71.

Grâce à cet agencement, la rondelle 4 est déplacée de sa position basculée vers sa position transversale par translation du point de basculement 41 par rapport au premier tube 11, et par appui du point de butée 42 contre la butée fixe 71.

Dans le cas où l'orifice 40 de la rondelle 4 présente des bords opposés parallèles, la tige 21 a de préférence une section polygonale régulière dont le nombre de côtés est pair, par exemple une section hexagonale.

Le fonctionnement de l'assemblage correspondant au mode de réalisation préféré de l'invention est illustré aux figures 6 à 8.

Sur la figure 6, la rondelle 4 adopte sa position transversale, et la tige 21 peut coulisser librement par rapport au tube 11 aussi bien dans le sens de l'introduction de la tige dans le tube que dans le sens de l'extraction de la tige hors du tube.

Une rotation du levier 6 vers la droite, telle qu'illustrée à la figure 7, a pour effet d'écarter de la butée fixe 71 le point de butée 42 de la rondelle 4, cette dernière adoptant ainsi sa position basculée, pour laquelle la tige 21 est solidaire en translation de la rondelle 4 (figure 7).

Une rotation supplémentaire du levier 6 vers la droite, telle qu'illustrée à la figure 8, a alors pour effet de mettre la tige 21 en tension en la tirant suivant la direction D1.

Les figures 9 et 10 illustrent un support de bicyclette pour véhicule automobile réalisé à partir d'un assemblage conforme à l'invention.

Dans ce cas, l'assemblage comprend une fourche creuse 10 et une fourche pleine 20, la fourche creuse 10 étant rendue solidaire du véhicule au moyen d'organes de liaison appropriés tels que 9.

La fourche creuse 10 comprend le tube 11, un second tube 12 coplanaire avec le premier tube 11, et un étrier 13 reliant les deux tubes 11 et 12 l'un à l'autre.

La fourche pleine 20 comprend la tige 21, une seconde tige 22, et une base 23 reliant les première et seconde tiges 21 et 22 l'une à l'autre.

Chacune des tiges 21 et 22 est montée coulissante, de façon amovible, dans le tube 11 ou 12 correspondant.

Dans ces conditions, l'étrier 13 et la partie de la fourche pleine 20 qui reste à l'extérieur de la fourche creuse 10 forment ensemble un anneau dont la dimension peut être réglée par déplacement des tiges 21 et 22 dans les tubes 11 et 12, et fixée à toute valeur choisie par blocage de la tige 21 dans le tube 11.

Comme le montrent les figures 9 et 10, il est ainsi possible d'enserrer de façon ferme, des profilés de tailles et de sections diverses, tels que des cadres de bicyclettes.

## Revendications

1. Assemblage mécanique réglable, comprenant au moins un premier tube (11), une première tige (21) amovible sélectivement montée coulissante dans le premier tube (11), et un mécanisme d'arrêt (3) permettant d'immobiliser à volonté la première tige (21) en translation dans le premier tube (11), **caractérisé en ce que** le mécanisme d'arrêt (3) comprend une rondelle de blocage (4), un point de basculement (41), un ressort précontraint (5), un levier (6), et un point d'appui (61), **en ce que** la rondelle (4) est montée basculante autour du point de basculement (41) et percée d'un orifice (40) dans lequel la première tige (21) est enfilée et peut ou ne peut pas coulisser, selon que la rondelle (4) adopte respectivement, par rapport à cette première tige (21), une position transversale ou une position basculée obliquement, **en ce que** le ressort (5) exerce sur la rondelle (4) une force élastique qui la sollicite vers sa position basculée par rotation autour du point de basculement (41), et **en ce que** le levier (6) est sélectivement mobile, autour du point d'appui (61), entre une position de blocage de la première tige et une position de déblocage de la première tige, le levier (6) exerçant, en position de déblocage, une force de compensation qui s'oppose à la force élastique du ressort (5) et qui place la rondelle (4) en position transversale.

2. Assemblage mécanique suivant la revendication 1, **caractérisé en ce que** la rondelle (4), le point de basculement (41) et le ressort (5) sont mobiles en translation par rapport au premier tube (11).

3. Assemblage mécanique suivant la revendication 2, **caractérisé en ce qu'**il comprend une butée (71) fixe par rapport au premier tube (11), **en ce que** la rondelle (4) présente un point de butée (42) disposé au-delà de la première tige par rapport au point de basculement (41) par rapport à la première tige (21), et **en ce que** la rondelle (4) est déplacée de sa position basculée vers sa position transversale par translation du point de basculement (41) par rapport au premier tube (11), et par appui du point de butée (42) contre la butée fixe (71).

4. Assemblage mécanique suivant la revendication 2 ou 3, **caractérisé en ce qu'**il comprend un boîtier (7) fixe par rapport au premier tube (11), **en ce que** la rondelle (4), le point de basculement (41) et le ressort (5) sont portés par un chariot (8) mobile en translation par rapport au boîtier (7), et **en ce que** le chariot (8) adopte, par rapport au boîtier (7), une position de translation dépendant de la position du levier (6).

5. Assemblage mécanique suivant la revendication 4, **caractérisé en ce que** le point d'appui (61) du levier (6) est constitué par un axe de rotation prévu dans le boîtier (7).

6. Assemblage mécanique suivant la revendication 4 ou 5, **caractérisé en ce que** le ressort (5) est précontraint en compression entre une cloison (81) du chariot (8) et la rondelle (4).

7. Assemblage mécanique suivant l'une quelconque des revendications précédentes combinée à la revendication 5, **caractérisé en ce que** le levier (6) porte au moins un pion d'entraînement (62) distant de l'axe de rotation (61) et engagé dans une lumière (82) du chariot (8).

8. Assemblage mécanique suivant l'une quelconque des revendications précédentes, **caractérisé en ce que** la première tige (21) a une section polygonale régulière présentant un nombre pair de côtés.

9. Assemblage mécanique suivant l'une quelconque des revendications précédentes, **caractérisé en ce qu'**il comprend une fourche creuse (10) et une fourche pleine (20), **en ce que** la fourche creuse (10) comprend le premier tube (11), un second tube (12) coplanaire avec le premier (11), et un étrier (13) reliant les premier et second tubes (11, 12) l'un à l'autre, **en ce que** la fourche pleine (20) comprend la première tige (21), une seconde tige (22), et une base (23) reliant les première et seconde tiges (21, 22) l'une à l'autre, **en ce que** la seconde tige (22) est amovible et montée coulissante dans le second tube (12), et **en ce qu'**une partie de la fourche pleine (20), externe à la fourche creuse (10), et l'étrier (13) forment ensemble un anneau de dimension réglable par déplacement de la première tige (21) dans le premier tube (11).

10. Application d'un assemblage suivant l'une quelconque des revendications précédentes à la réalisation d'un support de bicyclette pour véhicule automobile.
